# EUROPÄISCHE PATENTSCHRIFT

(11) **EP 3 131 775 B1**
(45) Veröffentlichungstag und Bekanntmachung des Hinweises auf die Patenterteilung: **01.05.2019**
(21) Anmeldenummer: 15700261.9
(22) Anmeldetag: 14.01.2015
(51) Int. Cl.: B60L 11/14, B60L 3/00, B60W 20/10, B60K 6/26, B60K 6/365, B60K 6/50, B60W 10/08, F16H 3/72, H02P 5/00, B60L 11/12, B60L 11/18, B60L 15/20, H02K 7/116, H02K 16/00, H02K 11/21, H02K 11/25, H02K 11/33

(54) **ELEKTRISCHER ANTRIEB, VERFAHREN ZU DESSEN BETRIEB UND SERIELLER HYBRIDANTRIEBSSTRANG FÜR EIN KRAFTFAHRZEUG**
ELECTRIC DRIVE, METHOD FOR THE OPERATION THEREOF, AND SERIAL HYBRID DRIVE TRAIN FOR A MOTOR VEHICLE
PROPULSION ÉLECTRIQUE, PROCÉDÉ POUR SON OPÉRATION ET CHAÎNE D'ENTRAÎNEMENT SÉRIELLE POUR UN VÉHICULE AUTOMOBILE

(30) Priorität: 05.03.2014 DE 102014203999
(43) Veröffentlichungstag der Anmeldung: 22.02.2017
(73) Patentinhaber: Volkswagen Aktiengesellschaft, 38440 Wolfsburg (DE)
(72) Erfinder: PETERSEN, Rainer, 38444 Wolfsburg (DE); MÖCKEL, Jörg, 38524 Sassenburg (DE); SUE, Armin, 38527 Meine (DE); STRAUSS, Henning, 31311 Uetze (DE); PLIKAT, Robert, 29369 Ummern (DE)
(86) Internationale Anmeldenummer: PCT/EP2015/050609
(87) Internationale Veröffentlichungsnummer: WO 2015/132010

(56) Entgegenhaltungen:
- DE-A1-102005 061 006
- DE-A1-102006 040 144
- JP-A- 2010 206 904
- US-A1- 2008 197 810
- US-A1- 2010 207 559

## Beschreibung

### Gebiet der Erfindung

Die Erfindung bezieht sich auf einen elektrischen Antrieb, umfassend
- eine Motoranordnung mit einer Mehrzahl elektrischer Maschinen mit parallel zueinander angeordneten Motorwellen,
- eine Abtriebsanordnung und
- eine einerseits mit der Motoranordnung und andererseits mit der Abtriebsanordnung verbundene Übersetzungsstufe mit einer mit der Abtriebsanordnung verbundenen Übersetzungs-Sonne und einer Mehrzahl jeweils mit einer der elektrischen Maschinen verbundener Übersetzungs-Planeten, die jeweils auf den Motorwellen fixiert und ringförmig um die Übersetzungs-Sonne angeordnet sind und drehmomentübertragend an ihr abwälzen.

Die Erfindung bezieht sich weiter auf ein Verfahren zu dessen Betrieb sowie auf die Nutzung des erfindungsgemäßen Antriebs und des erfindungsgemäßen Verfahrens als serieller Hybridantriebsstrang für ein Kraftfahrzeug.

### Stand der Technik

Gattungsgemäße elektrische Antriebe sind bekannt aus der EP 0 211 000 B1. Diese Druckschrift offenbart ein elektromechanisches Präzisionsantriebssystem mit einer Vielzahl einzelner Elektromotoren, die mit parallel ausgerichteten Rotorwellen ringförmig angeordnet sind. Jede Rotorwelle des bekannten Systems trägt ein Stirnrad, welches mit einem gemeinsamen Sonnenrad kämmt, das im Zentrum des von den Planetenrädern gebildeten Rings angeordnet ist. Diese Anordnung dient der Summation der geringen Drehmomente der einzelnen elektrischen Maschinen zu einem hohen Gesamtmoment, welches an der mit der Sonne verbundenen Ausgangswelle abgegriffen werden kann.

In der noch nicht veröffentlichten Voranmeldung DE 10 2013 212 868 ist ein Konzept beschrieben, welches den Einsatz eines solches elektrischen Antriebs in einem Kraftfahrzeug begünstigt. Insbesondere behandelt diese Voranmeldung vorteilhafte Details der Übersetzungsstufe, welche die Verwendung sogenannter Höchstdrehzahlmotoren, d.h. elektrischer Maschinen mit Drehzahlen von mehr als 20.000 U/min, die sich durch besondere Effizienz und Laufruhe auszeichnen, als elektrische Maschinen des hier in Rede stehenden Antriebs ermöglichen. In der ebenfalls noch unveröffentlichten Voranmeldung DE 10 2013 212 867sind Details der Ankopplung eines aus ringförmig angeordneten elektrischen Maschinen zusammengesetzten Antriebs an die nachfolgenden Elemente eines Kraftfahrzeug-Antriebsstrangs beschrieben. Die vorliegende Erfindung versteht sich in erster Linie als Ergänzung zu den vorgenannten Erfindungen, mit denen zusammen sie vorzugsweise in Kombination eingesetzt wird, allerdings auch unabhängig von ihnen einsetzbar ist.

Die oben genannte, gattungsbildende Druckschrift lehrt allein eine unabhängige, synchrone Ansteuerung sämtlicher elektrischer Maschinen des Antriebs, offenbart hierzu jedoch keine.

Die Druckschrift DE102006040144 A1 wird als nächstliegender Stand der Technik angesehen und offenbart die Präambel des unabhängigen Anspruchs 1.

### Aufgabenstellung

Es ist die Aufgabe der vorliegenden Erfindung, konstruktive und ansteuerungstechnische Details für einen bekannten elektrischen Antrieb zur Verfügung zu stellen, sodass Synergieeffekte, die sich aus der Verwendung einer Vielzahl von elektrischen Maschinen ergeben können, sinnvoll ausgenutzt werden.

### Darlegung der Erfindung

Diese Aufgabe wird in Verbindung mit den Merkmalen des Oberbegriffs von Anspruch 1 dadurch gelöst, dass zur Ansteuerung der elektrischen Teilphasen der elektrischen Maschinen eine oder mehrere mit einer oder mehreren elektrischen Spannungsquellen verbundene Leistungselektroniken vorgesehen sind. Hierdurch wird die Vorrausetzung für die nachfolgend beschriebenen, besonders vorteilhaften Ausführungsformen gelegt, welche Gegenstand der abhängigen Patentansprüche sind.

Bei einer bevorzugten Ausführungsform ist vorgesehen, dass sämtliche elektrische Maschinen jeweils mit einer separaten Leistungselektronik verbunden sind. Dies erlaubt eine maximale Flexibilität bei der Ansteuerung des elektrischen Antriebs - ein Vorteil, der gegen die mit dem Einsatz einer Vielzahl von Leistungselektroniken verbunden Kosten und den entsprechenden Bauraumbedarf einzelfallbezogen abzuwägen ist.

Bei einer anderen, ebenfalls vorteilhaften Ausführungsform der Erfindung ist vorgesehen, dass zwei oder mehr elektrische Maschinen elektrisch miteinander verschaltet und dadurch mit derselben Leistungselektronik verbunden oder verbindbar sind. Dieses Konzept sieht insbesondere eine Hartverdrahtung von Wicklungen unterschiedlicher elektrischer Maschinen vor. Diese Hartverdrahtungen können permanent oder schaltbar sein. Dadurch wird es möglich, unterschiedliche elektrische Maschinen über dieselbe Leistungselektronik anzusteuern. Im Fall einer permanenten Hartverdrahtung ist eine Leistungselektronik dauerhaft mehreren elektrischen Maschinen zugeordnet. Im Fall schaltbarer Hartverdrahtungen kann die Zuordnung von Leistungselektroniken und elektrischen Maschinen bedarfsgerecht, insbesondere während des Betriebs, variiert werden.

Eine Weiterbildung der Erfindung, die für beide vorgenannten Alternativen einsetzbar ist, sieht vor, dass unterschiedliche Leistungselektroniken an unterschiedliche Spannungsquellen angeschlossen sind. Beispielsweise kann die Zuordnung im Hinblick auf unterschiedliche Betriebsspannungsanforderungen oder im Hinblick auf den Ladezustand einzelner als Spannungsquelle dienender, elektrischer Energiespeicher vorgenommen werden. Der Anschluss der Leistungselektroniken an die Spannungsquellen kann permanent oder schaltbar sein. Die letztgenannte Variante erlaubt eine höhere Flexibilität.

Günstigerweise ist jede Leistungselektronik über einen Regler, zu welchem Bewegungsparameter der Abtriebsanordnung und/oder der Übersetzungsanordnung rückgekoppelt sind, geregelt. Eine solche, im Grunde bekannte Regelung von Leistungselektroniken ist im Rahmen der vorliegenden Erfindung insbesondere in zwei vorteilhaften Varianten denkbar.

Bei einer ersten Variante ist vorgesehen, dass der Regler einer erster Leistungselektronik als Master-Regler und die Regler weiterer Leistungselektroniken als von dem Master-Regler abhängige Slave-Regler eingerichtet sind. Diese Variante hat den Vorteil, dass nur der Master-Regler eine Rückkopplung zu Bewegungsparametern nachgeordneter Elemente des Antriebsstrangs benötigt. Der Aufwand für Sensorik und Datenkommunikation ist bei dieser Variante daher besonders gering.

Alternativ hierzu kann selbstverständlich auch vorgesehen sein, dass alle Regler als voneinander unabhängige Partikular-Regler eingerichtet sind. Dies bedeutet zwar die Notwendigkeit der Versorgung jedes einzelnen Reglers mit rückkoppelnden Sensordaten, erlaubt jedoch eine maximale Flexibilität bei der Reglung der einzelnen elektrischen Maschinen.

Man beachte, dass es zwar möglich, im Rahmen der vorliegenden Erfindung jedoch nicht zwingend erforderlich ist, dass jeder Leistungselektronik genau ein Regler und umgekehrt jedem Regler genau eine Leistungselektronik zugeordnet ist. Vielmehr ist es auch möglich, dass ein Regler zur gemeinsamen Regelung mehrerer Leistungselektroniken verwendet werden kann. Die entsprechende Kopplung kann permanent oder schaltbar sein.

Außer Bewegungsparametern von den elektrischen Maschinen nachgeordneten Elementen des Antriebsstrangs können auch Betriebsparameter der elektrischen Maschinen selbst nützlich oder gar notwendig sein für die Antriebsansteuerung oder für sonstige Steueraufgaben. Bei deren Erfassung können wesentliche Synergieeffekte genutzt werden. So ist bei einer Weiterbildung der Erfindung vorgesehen, dass Sensoren zur unmittelbaren Erfassung von Werten bestimmter Betriebsparameter bei einigen der elektrischen Maschinen sowie zur Abschätzung nicht unmittelbar erfasster Werte derselben Betriebsparameter bei anderen elektrischen Maschinen vorgesehen sind. Der Begriff des Sensors umfasst hier nicht nur den eigentlichen Messkopf, sondern auch die Auswertung der jeweiligen Messwerte. Die genannte Weiterbildung der Erfindung sieht somit vor, dass nicht sämtliche benötigten Betriebsparameter einzeln und unmittelbar erfasst werden müssen. Vielmehr kann von einigen Werten, die bei ausgewählten elektrischen Maschinen aufgenommen werden, auf korrespondierende Werte bei anderen elektrischen Maschinen geschlossen werden, ohne das diese selbst unmittelbar gemessen werden müssten. Die unmittelbare Messung wird somit ersetzt durch Kenntnisse der Zusammenhänge im Gesamtsystem, was einer besonders vorteilhaften Nutzung von Synergieeffekten entspricht.

Beispielsweise kann vorgesehen sein, dass die elektrischen Maschinen gruppenweise unterschiedlichen Bautyps sind. So sind dem Fachmann beispielsweise Asynchronmotoren, permanentmagneterregte Motoren und Gleichstrommaschinen bekannt. Alle drei Bautypen haben unterschiedliche Vor- und Nachteile. Die permanentmagneterregten Motoren besitzen den Vorteil des einstellbaren Magnetisierungstroms und einer frequenzproportionalen Drehzahl. Hinsichtlich Kosten und Gewicht wirken sich die Permanentmagnete jedoch nachteilig aus. Außerdem entstehen im Fehlerfall hohe Spannungen, da die Erregung nicht abschaltbar ist. Darüber hinaus ist die Regelung solcher elektrischer Maschinen recht aufwendig, da auf Synchronität zwischen Feld- und Rotorfrequenz zu achten ist. Asynchronmaschinen hingegen sind aufgrund des Fehlens von Permanentmagneten vorteilhaft im Hinblick auf Gewicht und Kosten und bieten auch im Fehlerfall aufgrund Ihrer abschaltbaren Erregung deutliche Vorteile. Nachteilig bei Asynchronmaschinen ist hingegen die Notwenigkeit, Erregerbildleistung zur Erzeugung des Luftspaltfeldes mit dem Statorstrom bereitzustellen. Die Verwendung unterschiedlicher Bautypen innerhalb eines erfindungsgemäßen Antriebs ermöglicht die Nutzung der Vorteile jedes einzelnen Bautyps und die Reduzierung der Nachteile. Da für die Steuerung des Bautyps unterschiedliche Betriebsparameter von Bedeutung sind, kann vorgesehen sein, dass für jede Bautyp-Gruppe der elektrischen Maschinen für einen bestimmten Betriebsparameter nur ein entsprechender Sensor vorgesehen ist. Bei gleicher Ansteuerung erübrigt sich die Messung desselben Betriebsparameters für jede einzelne elektrische Maschine einer Bautyp-Gruppe. Die entsprechenden Sensoren können daher eingespart werden.

Unabhängig von Unterschieden im Bautyp kann auch vorgesehen sein, dass die elektrischen Maschinen gruppenweise unterschiedlich angesteuert sind. Auch hier können für unterschiedliche Ansteuerungen unterschiedliche Betriebsparameter von Bedeutung sein. So kann zur Nutzung von Synergieeffekten vorgesehen sein, dass für jede Ansteuerungs-Gruppe der elektrischen Maschinen für einen bestimmten Betriebsparameter nur ein entsprechender Sensor vorgesehen ist. Die übrigen gleich angesteuerten elektrischen Maschinen derselben Ansteuerungs-Gruppe benötigen keinen separaten Sensor, da ihr entsprechender Betriebsparameterwert als dem direkt gemessenen Wert gleich abgeschätzt wird.

Welche speziellen Betriebsparameter mittels der oben allgemein diskutierten Sensorik unmittelbar gemessen bzw. abgeschätzt wird, hängt von den Erfordernissen des Einzelfalls ab. So kann beispielsweise vorgesehen sein, dass Stromsensoren zur unmittelbaren Erfassung einiger angesteuerter Teilphasen sowie zur Abschätzung anderer, nicht unmittelbar erfasster Teilphasen der elektrischen Maschinen vorgesehen sind. Alternativ oder zusätzlich können Lagesensoren zur unmittelbaren Erfassung von Rotationslagen einiger der elektrischen Maschinen sowie zur Abschätzung nicht unmittelbar erfasster Rotationslagen anderer elektrischer Maschinen vorgesehen sein. Alternativ oder zusätzlich können auch Temperatursensoren zur unmittelbaren Erfassung von Temperaturen einiger der elektrischen Maschinen sowie zur Abschätzung nicht unmittelbar erfasster Temperaturen anderer der elektrischen Maschinen vorgesehen sein. Selbstverständlich können alternativ oder zusätzlich auch andere Betriebsparameter unter Ausnutzung der oben erläuterten Synergieeffekte erfasst bzw. abgeschätzt werden.

Als Beispiel für einen erfindungsgemäßen Antrieb mit unterschiedlichen Ansteuerungs-Gruppen seiner elektrischen Maschinen kann im Rahmen eines bevorzugten Betriebsverfahrens vorgesehen sein, dass eine erste Gruppe der elektrischen Maschinen motorisch und eine zweite Gruppe der elektrischen Maschinen generatorisch betrieben wird. Dadurch kann der Antrieb im Prinzip wie ein "mechanischer Spannungswandler" betrieben werden, wenn z. B. jede Ansteuerungsgruppe an unterschiedlichen Spannungsquelle bzw. Energiespeicher angeschlossen ist. Ein nach einem solchem Betriebsverfahren betriebener Antrieb eignet sich insbesondere zum Einsatz in einem seriellen Hybridantriebsstrang für ein Kraftfahrzeug, umfassend eine Verbrennungskraftmaschine, eine Abtriebsanordnung, einen elektrischen Energiespeicher, wenigstens eine mechanisch mit der Verbrennungskraftmaschine und elektrisch mit dem elektrischen Energiespeicher gekoppelte und generatorisch betriebene elektrische Maschine sowie wenigstens eine mechanisch mit der Abtriebsanordnung und elektrisch mit dem elektrischen Energiespeicher gekoppelte und motorisch betriebene elektrische Maschine. Dabei sind die elektrischen Maschinen einer ersten, nämlich generatorisch angesteuerten Ansteuerungs-Gruppe mit der Verbrennungskraftmaschine und die elektrischen Maschinen einer weiteren, nämlich motorisch betriebenen Ansteuerungs-Gruppe mit der Abtriebsanordnung verbunden. Aus Bauraumgründen sind dabei die parallel zueinander angeordneten Motorwellen vorzugsweise antiparallel orientiert. D.h. der erfindungsgemäße Antrieb kann räumlich zwischen der Verbrennungskraftmaschine und der Abtriebsanordnung positioniert werden, wobei die Planetenräder der generatorisch betriebenen Ansteuerungs-Gruppe mit der Verbrennungskraftmaschine und die Planetenräder der motorisch betriebenen Ansteuerungs-Gruppe mit der Abtriebsanordnung wechselwirken.

Ein anderes Beispiel für die unterschiedliche Ansteuerung von elektrischen Maschinen unterschiedlicher Ansteuerungs-Gruppen innerhalb des erfindungsgemäßen Antriebs betrifft ihren Schlupf. So kann bei einer Ausführungsform der Erfindung vorgesehen sein, dass unterschiedliche Gruppen der elektrischen Maschinen mit unterschiedlichen Schlupf ihrer Übersetzungs-Planeten relativ zu der Übersetzungs-Sonne betrieben werden. Dies kann im Extremfall so weit führen, dass die Wechselwirkung einzelner Übersetzungs-Planeten mit der Übersetzungs-Sonne vollständig aufgehoben wird, sodass die entsprechende elektrische Maschine vollständig abgeschaltet werden kann. Dies dient der Vermeidung von Schleppverlusten in Fällen, in denen nur ein geringes Drehmoment an der Übersetzungs-Sonne erforderlich ist. Ein derartiges Betriebsverfahren bietet sich insbesondere in Fällen an, in denen die Übersetzungsstufe als Friktionsstufe ausgebildet ist, d.h. bei der die Übersetzungs-Planeten reibschlüssig mit der Übersetzungs-Sonne wechselwirken. In Fällen einer formschlüssigen Wechselwirkung, beispielsweise im Rahmen einer Zahnradstufe, ist eine Schlupfregelung zwar auch denkbar, zeitigt jedoch nicht Vorteile in gleichem Ausmaß.

In Kombination mit der vorgenannten Variante oder unabhängig davon kann vorgesehen sein, dass unterschiedliche Gruppen der elektrischen Maschinen zeitlich versetzt zueinander zeitweise mit Überlast und zeitweise mit Unterlast betrieben werden. Hierdurch ergibt sich eine große Flexibilität durch die Möglichkeit temporärer Verschiebung der System-Betriebspunkte, wobei eine Systemüberlastung ausgeschlossen ist, da zeitweise mit Überlast betriebene elektrische Maschinen, die sich dabei erheblich aufheizen können, während ihrer Betriebsphasen in Unterlast wieder abkühlen können, wobei zuvor abgekühlte Maschinen für einen temporären Einsatz in Überlast zur Verfügung stehen.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1: eine schematische Schnittdarstellung durch die Übersetzungsstufe einer bevorzugten Ausführungsform der Erfindung,
- Figur 2: eine teilweise geschnittene Darstellung der Motoranordnung einer bevorzugten Ausführungsform der Erfindung in Draufsicht auf deren übersetzungsstufenseitige Stirnseite sowie in Seitenansicht,
- Figur 3: eine perspektivische Darstellung der Motoranordnung von Figur 2 mit dargestellten Exzenterlagern,
- Figur 4: eine schematische Darstellung des die Motoranordnung der Figuren 2 und 3 von der Übersetzungsstufe von Figur 1 trennenden Gehäusedeckels zur Verdeutlichung der Funktion der Exzenterlager,
- Figur 5: eine schematische Darstellung einer ersten Ausführungsform einer Antriebsanordnung unter Verwendung der vorliegenden Erfindung,
- Figur 6: eine schematische Darstellung einer zweiten Ausführungsform einer Antriebsanordnung gemäß der vorliegenden Erfindung,
- Figur 7: eine schematische Darstellung einer ersten Verschaltungsvariante zur Verbindung elektrischer Maschinen und Leistungselektroniken,
- Figur 8: eine alternative Verschaltung zu Figur 7,
- Figur 9: eine schematische Darstellung einer ersten Verschaltungsvariante zur Regelung der elektrischen Maschinen,
- Figur 10: eine alternative Verschaltung zu Figur 9,
- Figur 11: eine schematische Darstellung zur Teilphasen-Sensorik,
- Figur 12: eine schematische Darstellung eines seriellen Hybrid-Antriebsstrangs gemäß Stand der Technik,
- Figur 13: eine schematische Darstellung eines seriellen Hybrid-Antriebsstrangs unter Einsatz der vorliegenden Erfindung.

### Ausführliche Beschreibung bevorzugter Ausführungsformen

Gleiche Bezugszeichen in den Figuren deuten auf gleiche oder analoge Elemente hin.

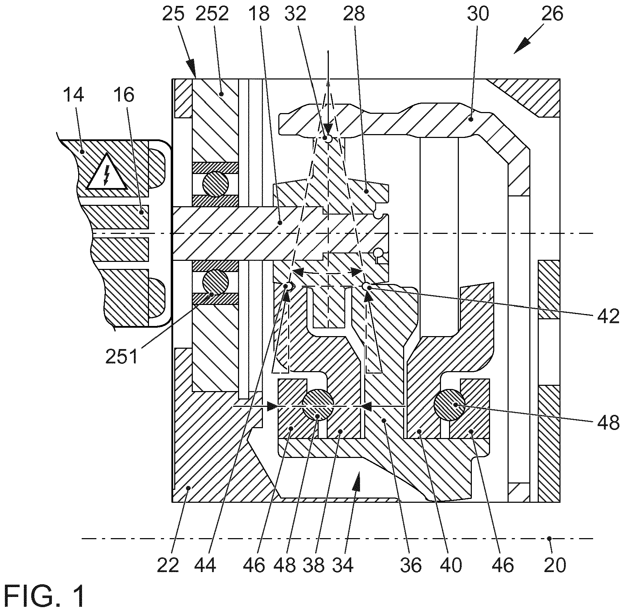

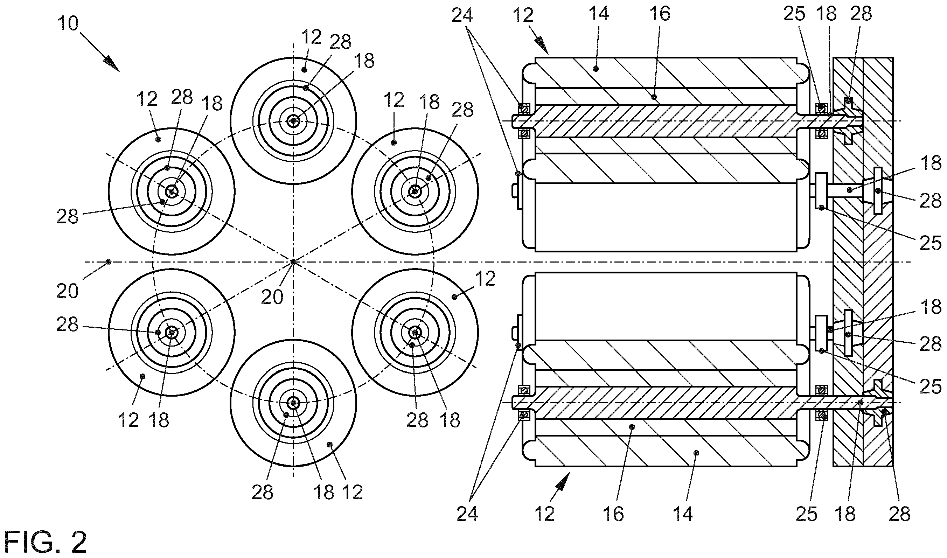

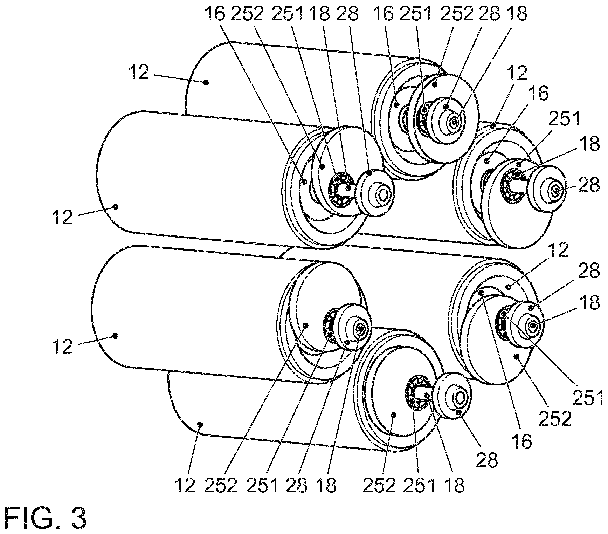

Figur 1 zeigt eine schematische Schnittdarstellung der Übersetzungsstufe eines erfindungsgemäßen Antriebs, die zum leichteren Verständnis günstigerweise gemeinsam mit den Figuren 2 und 3 zu betrachten ist, die auch gemeinsam beschrieben werden sollen. Die insbesondere in den Figuren 2 und 3 verdeutlichte Motoranordnung 10 umfasst eine Mehrzahl (bei der gezeigten Ausführungsform sechs) elektrischer Maschinen 12, jeweils umfassend einen Stator 14 und einen Rotor 16, die mit parallel ausgerichteten Rotorwellen 18 ringförmig um eine Zentralachse 20 angeordnet sind und einen Motorenring bilden. Bei den elektrischen Maschinen 12 handelt es sich vorzugsweise um Höchstdrehzahl-Maschinen, die mit Drehzahlen von über 20000 U/min betrieben werden können. Während die Statoren 14 der elektrischen Maschinen 12 an einem Gehäuse 22 festgelegt sind, sind die Rotorwellen 18 beiderseits der Rotoren 16 am Gehäuse gelagert, wobei auf die spezielle Ausgestaltung der Lager 24, 25 weiter unten detailliert eingegangen werden soll.

Einerseits der elektrischen Maschinen 12 sind deren Rotorwellen 18 verlängert und ragen in eine benachbarte Übersetzungsstufe 26 hinein. Dort tragen sie jeweils einen als Reibrolle ausgebildeten Übersetzungs-Planeten 28, der als Stufenplanet ausgebildet ist und in einem zentralen Axialbereich einen größeren Durchmesser aufweist, als in seinen beidseitig des Zentralbereichs angeordneten äußeren Axialbereichen. Die Übersetzungs-Planeten 28 sind fest auf den Rotorwellen 18 fixiert. Sie bilden gemeinsam das angetriebene Eingangselement der Übersetzungsstufe 26. Diese ist als Reibrollen-Planetenstufe ausgebildet. Radial außen ist ein rotierbar gelagertes Hohlrad 30 angeordnet, welches in einem Kontaktbereich 32 den Zentralbereich des Übersetzungs-Planeten 28 reibschlüssig kontaktiert, sodass es durch die angetriebene Rotationsbewegung der Übersetzungs-Planeten 28 selbst in Rotation versetzt wird. Radial innerhalb der Übersetzungs-Planeten 28 ist eine mehrteilig ausgebildete Übersetzungs-Sonne 34 angeordnet. Diese umfasst eine axial fest und drehbar gelagerte Innensonnenscheibe 36 und zwei ebenfalls rotierbar, jedoch zusätzlich axial verschieblich angeordnete Außensonnenscheiben 38, 40. Der in Figur 1 gezeigte Übersetzungs-Planet 28 ist zwischen der Innensonnenscheibe 36 und der Außensonnenscheibe 38 derart eingespannt, dass beide mit ihren Kontaktbereichen 42, 44 die mit nach außen abfallenden Schultern ausgebildeten äußeren Axialbereiche des Übersetzungs-Planeten 28 reibschlüssig kontaktieren. Der motorische Antrieb der Übersetzungs-Planeten 28 bewirkt somit zusätzlich zu der Rotation des Übersetzungs-Hohlrades 30 eine gegenläufige Rotation der Übersetzungs-Sonne 34, wobei sich die Drehzahlverhältnisse zwischen Übersetzungs-Hohlrad 30 und Übersetzungs-Sonne 34 aus dem Verhältnis der jeweiligen Kontaktradien zwischen Übersetzungs-Planeten 28 und Übersetzungs-Hohlrad 30 einerseits und Übersetzungs-Planeten 28 und Übersetzungs-Sonne 34 andererseits ergibt. Dieses Verhältnis, insbesondere der genaue Kontaktradius zwischen den Übersetzungs-Planeten 28 und der Übersetzungs-Sonne 34 ist in geringfügigem Maße variabel. Diese Variabilität dient in erster Linie nicht der Übersetzungseinstellung, sondern vielmehr der Schlupfoptimierung innerhalb der als Reibrollen-Planetenstufe ausgebildeten Übersetzungsstufe 26. Insbesondere ist bei der dargestellten Ausführungsform eine drehmomentabhängige, insbesondere drehmomentproportionale Schlupfsteuerung realisiert. Hierzu ist jeweils axial außen benachbart zu den Außensonnenscheiben 38, 40 eine Stirnnockenanpressscheibe 46 angeordnet, die fest mit der Innensonnenscheibe 36 verbunden ist. Jede Außensonnenscheibe 38, 40 stützt sich über in Rampen geführte Abstandselemente 48 gegen die jeweils zugeordnete Stirnnockenanpressscheibe 46 ab. Ein beim motorischen Antrieb der Übersetzungs-Planeten 28 zwischen der Innensonnenscheibe 36 und den Außensonnenscheiben 38, 40 auftretendes Relativmoment führt zu einer Relativverdrehung der Außensonnenscheiben 38, 40 zu ihrer jeweils zugeordneten Stirnnockenanpressscheibe, was aufgrund der Rampenführung der Abstandselemente 48 zu einer entsprechenden Axialverschiebung der jeweiligen Außensonnenscheibe 38, 40 führt. Hierdurch wird der Kontaktdruck zwischen der Übersetzungs-Sonne 34 und den Übersetzungs-Planeten 28 abhängig vom übertragenden Drehmoment, insbesondere proportional zu diesem eingestellt. Aufgrund der Schräge der Kontaktbereiche 42, 44 zwischen Übersetzungs-Sonne 34 und Übersetzungs-Planeten 28 führt dies zusätzlich zu einer leichten radialen Verschiebung der Übersetzungs-Planeten 28 und damit zu einer entsprechenden Kontaktdruckänderung im Kontaktbereich 32 zwischen Übersetzungs-Planeten 28 und Übersetzungs-Hohlrad 30. Dieser Übersetzungsbereich ist bevorzugt axial flach gehalten, sodass sich auch bei einer leichten axialen Verschiebung der Übersetzungs-Planeten 28 keine Änderung bzgl. des Kontaktdruckes oder des Kontaktradius zwischen Übersetzungs-Planeten 28 und Übersetzungs-Hohlrad 30 ergibt.

Die Bedeutung der doppelten Ausführung der Außensonnenscheiben 38, 40 erschließt sich insbesondere aus der Darstellung von Figur 2. Bei der dargestellten Ausführungsform sind nämlich drei der sechs elektrischen Maschinen 12 mit einer kürzeren Rotorwelle 18 und die drei übrigen elektrischen Maschinen 12 mit einer längeren Rotorwelle 18 ausgestattet. Entsprechend weiter bzw. weniger weit reichen sie in die Übersetzungsstufe 26 hinein, sodass jeweils zwei einander azimutal benachbarte Übersetzungs-Planeten 28 mit derselben Innensonnenscheibe 36, jedoch mit unterschiedlichen Außensonnenscheiben 38, 40 interagieren. Diese gruppenweise Zusammenwirkung von je drei elektrischen Maschinen 12, wie in den Figuren dargestellt, ist besonders vorteilhaft, jedoch nicht zwingend erforderlich. Bei solcher Anordnung bzw. Gruppierung der E-Maschinen ist besonders vorteilhaft, dass je eine Gruppe der E-Maschinen eine Ansteuerungsgruppe im Sinne dieser Anmeldung vorstellt.

Wie erwähnt ist die Kontaktdrucksteuerung zwischen Übersetzungs-Sonne 34 und Übersetzungs-Planeten 28 mit einer geringfügigen axialen und radialen Verschiebung der letzteren verbunden. Dies ist insofern nicht unproblematisch, als sie fest auf den Rotorwellen 18 der elektrischen Maschinen 12 fixiert sind. Die genannte Bewegung setzt sich somit auch auf die jeweilige Rotorwelle 18 fort, was bei deren Lagerung berücksichtigt werden sollte.

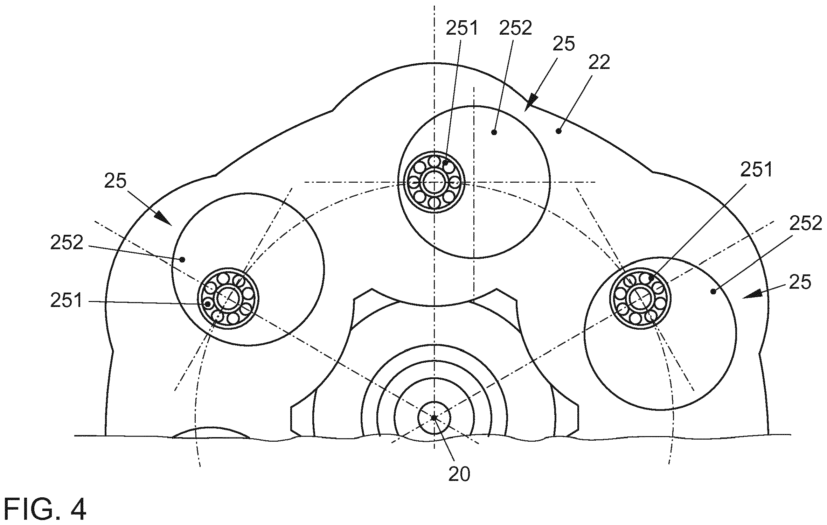

Die auf der der Übersetzungsstufe 26 abgewandten Seite der elektrischen Maschinen 12 positionierten Lager 24 sind als Los-Kugellager ausgebildet. Sie nehmen radiale Kräfte auf, setzen jedoch weder axialen Kräften noch einem Kippmoment einen Widerstand entgegen. Dies ist hinreichend, da der Lagerort des Lagers 24 als Drehpunkt einer Kippbewegung angesehen werden kann, die aus einer Radialverschiebung des zugeordneten Übersetzungs-Planeten 28 resultiert. Im Gegensatz dazu müssen die auf der der Übersetzungsstufe 26 zugewandten Seite der elektrischen Maschinen gelegenen Lager 25 einen radialen Freiheitsgrad aufweisen. Allerdings müssen sie gleichzeitig Kräfte in - auf den Motorenring bezogen - tangentialer Richtung aufnehmen. Sie sind daher, wie insbesondere aus den Figuren 3 und 4 ersichtlich, als Exzenterlager 25 ausgebildet. Die Exzenterlager 25 der dargestellten Ausführungsform umfassen jeweils ein Kugellager 251, welches exzentrisch in einer Lagerscheibe 252 fixiert ist, die ihrerseits drehbar in einem Deckel des Gehäuses 22 gelagert ist. Die Exzentrizität des Exzenterlagers 25, d.h. der gerichtete Abstand zwischen dem Zentrum des Kugellagers 251 und der Lagerscheibe 252, ist - bezogen auf den Motorenring - in tangentialer Richtung ausgerichtet. Eine im Rahmen der Kontaktdruckanpassung erfolgte Radialverschiebung der Übersetzungs-Planeten 28 führt somit zu einer - bezogen auf die Lagerscheibe 252 - tangentenparallelen Versetzung, d.h. einer Kreisschiebung des Kugellagers 251. Aufgrund der Geringfügigkeit der im Rahmen der Kontaktdruckanpassung auftretenden Verschiebungen kann diese Bewegung als linear angesehen werden; ihr eigentlicher Kreisbahncharakter kann vernachlässigt werden.

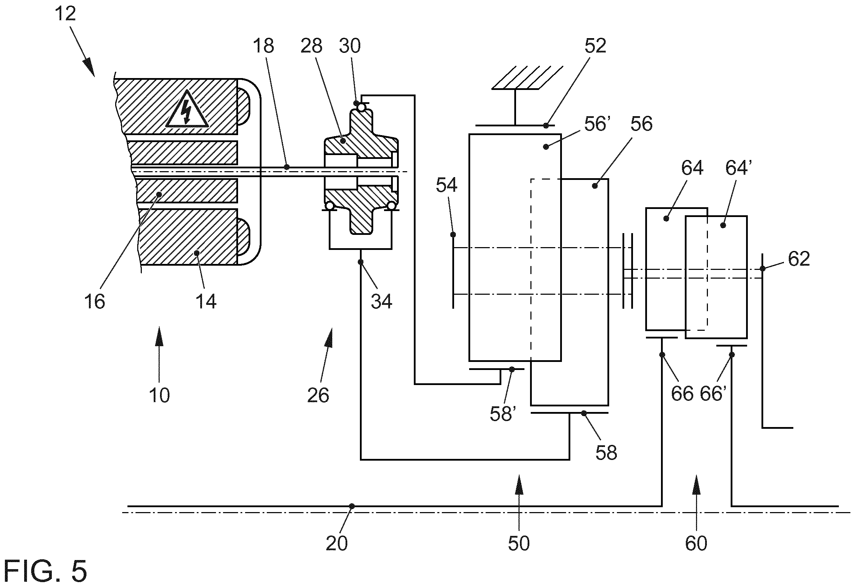

Figur 5 zeigt die Motoranordnung 10 und die Übersetzungsstufe 26 in stark vereinfachter Darstellung, um deren Ankopplung an nachfolgende Abtriebselemente einer Kraftfahrzeug-Antriebsanordnung zu illustrieren. Wie oben ausführlich erläutert, dienen das Übersetzungs-Hohlrad 30 und die Übersetzungs-Sonne 34 als Ausgangselemente der Übersetzungsstufe 26. Sie sind gekoppelt mit den Eingangselementen einer nachfolgenden Summierstufe 50, die in Form eines vorzugsweise stirnverzahnten Ravigneaux-Satzes ausgestaltet ist. Dieser weist ein gehäusefestes Summier-Hohlrad 52 und einen Summier-Steg 54 auf, auf dem zwei Sätze von Summier-Planeten 56, 56', die miteinander kämmen, gelagert sind. Die Summier-Planetensätze 56, 56' kämmen weiter mit zwei Summier-Sonnen 58, 58', die als Eingangselemente der Summierstufe 50 dienen und entsprechend mit der Übersetzungs-Sonne 34 bzw. dem Übersetzungs-Hohlrad 30 verbunden sind. Die Summierstufe 50 dient der Zusammenführung der unterschiedlichen Drehzahlen und Drehmomente, die an dem Übersetzungs-Hohlrad 30 und der Übersetzungs-Sonne 34 anliegen.

Zur Weiterleitung der in der Summierstufe 50 aufsummierten Drehbewegung ist bei der Ausführungsform von Figur 5 ein Stirnraddifferential 60 vorgesehen, welches in üblicher Bauweise mit einem Differential-Steg 62 ausgebildet ist, auf dem zwei Sätze von Differential-Planeten 64, 64', die miteinander kämmen, gelagert sind. Die Differential-Planetensätze 64, 64' kämmen mit zwei Differential-Sonnen 66, 66', die als Ausgangselemente des Differentials 60 dienen und jeweils mit einem in Figur 5 nicht näher dargestellten Antriebsrad eines Kraftfahrzeugs verbunden sind. Bei der in Figur 5 dargestellten, besonders bevorzugten Ausführungsform bilden der Summier-Steg 54 und der Differential-Steg 62 ein gemeinsames Bauteil mit unterschiedlichen Axialabschnitten, in deren einem die Summier-Planeten 56, 56' und in deren anderem die Differential-Planeten 64, 64' gelagert sind.

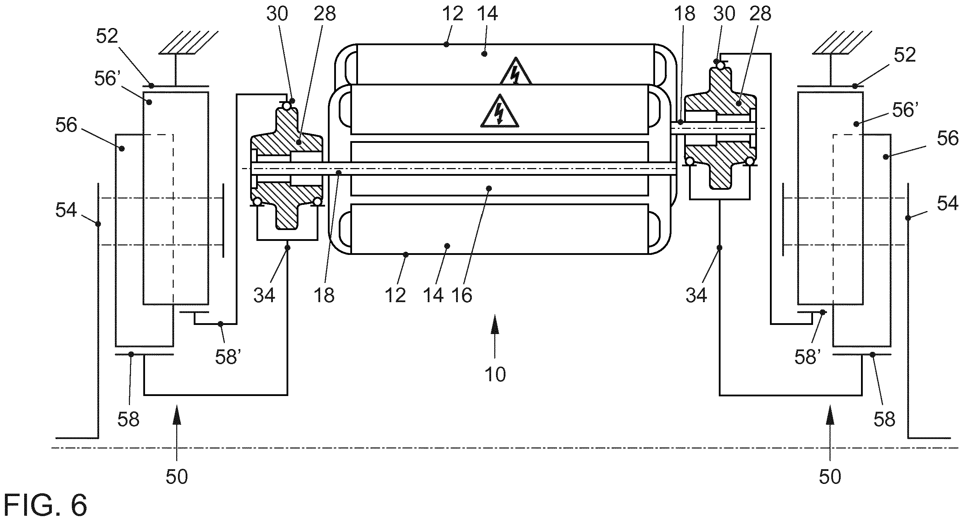

Figur 6 zeigt eine alternative Ausgestaltung einer Antriebsanordnung für ein Kraftfahrzeug, die insbesondere auf ein Differential 60 verzichtet. Im Gegensatz zu der Darstellung der Figuren 2 und 3 sind bei dieser Ausführungsform die elektrischen Maschinen 12 gruppenweise antiparallel zueinander orientiert, sodass beiderseits des Motorenrings eine Übersetzungsstufe und eine sich daran anschließende Summierstufe 50 angeordnet werden kann. Diese Anordnung ist in Figur 6 gezeigt. Jeder der beiden Summier-Stege 54 bildet somit ein unabhängiges Ausgangselement der Antriebsanordnung, welches mit einem unmittelbar angetriebenen Antriebsrad des Kraftfahrzeugs verbunden ist. Sämtliche Differentialfunktionen und auch darüber hinausgehende Funktionen, wie das sogenannte Torque-Vectoring lassen sich durch entsprechende Ansteuerung der Motorgruppen realisieren. Selbstverständlich wäre es auch möglich, jeder der beiden Summierstufen 50 der Anordnung von Figur 6 ein eigenes Differential 60 nachzuschalten und so zwei unabhängig voneinander angetriebene Achsen zu realisieren.

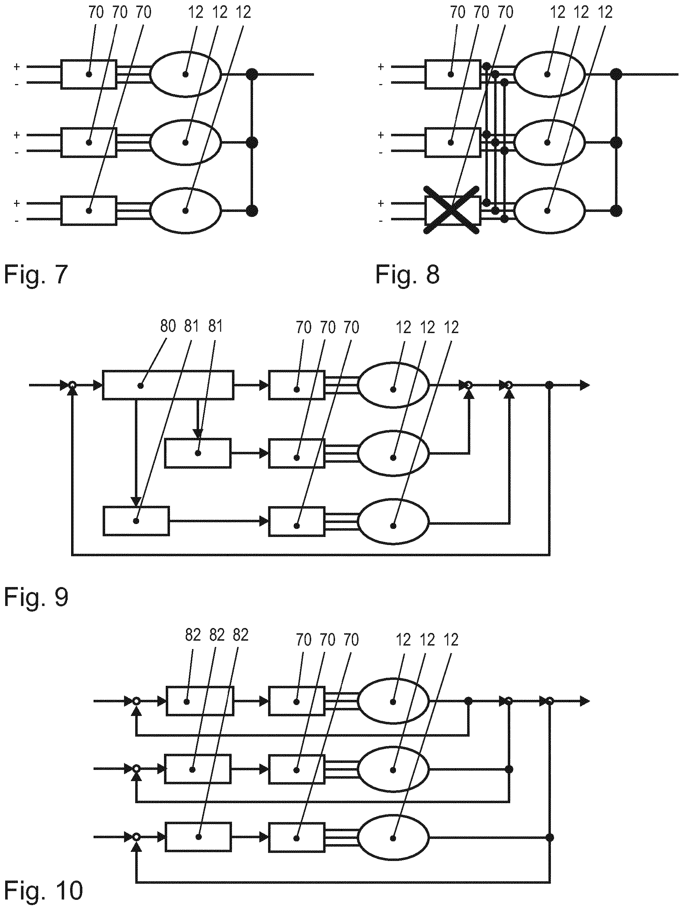

Figur 7 zeigt in stark schematisierter Darstellung eine mögliche Verschaltung der elektrischen Maschinen 12 eines erfindungsgemäßen Antriebs. Dargestellt sind, wie auch in den nachfolgend beschriebenen Figuren 8 bis 10 lediglich drei elektrische Maschinen 12. Der Fachmann wird erkennen, dass die beispielhaft gezeigten Konzepte jedoch auch bei einer beliebigen Mehrzahl von elektrischen Maschinen 12 einsetzbar sind. Bei der Ausführungsform von Figur 7 ist jede einzelne elektrische Maschine 12 mit einer ausschließlich ihr zugeordneten Leistungselektronik umgangsseitig verschaltet. Ausgangsseitig sind die Momente der elektrischen Maschinen 12 über die nicht im Detail dargestellte Übersetzungsstufe gekoppelt. Die dargestellte Ausführungsform erlaubt ein Maximum an Steuerflexibilität für die elektrischen Maschinen 12, hat jedoch gleichzeitig den Nachteil eines erheblichen Kosten- und Bauraumaufwandes für die Vielzahl erforderlicher Leistungselektroniken. Der Flexibilitätsvorteil kann insbesondere dadurch noch gesteigert werden, dass die Leistungselektroniken 70, wie in Figur 7 eingangsseitig angedeutet, an unterschiedliche Spannungsquellen, gegebenenfalls mit unterschiedlichen Spannungsniveaus, gekoppelt sind. Selbstverständlich ist es auch möglich, sämtliche Leistungselektroniken 70 aus derselben Spannungsquelle zu speisen.

Figur 8 zeigt eine alternative Verschaltung, bei der die Teilphasen der einzelnen elektrischen Maschinen 12 miteinander hart verdrahtet sind. Dies Hartverdrahtung kann, wie in Figur 8 angedeutet, permanent oder auch schaltbar sein. Sie ermöglicht, wie in Figur 8 angedeutet, den Verzicht auf eine oder mehrere Leistungselektroniken 70, wobei dieser Verzicht grundlegend oder temporär sein kann. Bei einem grundlegenden Verzicht auf eine oder mehrere Leistungselektroniken (im Vergleich zur Schaltungsvariante von Figur 7) werden entsprechende Leistungselektroniken bei der Konzeption des erfindungsgemäßen Antriebs garnicht erst vorgesehen. Bei einem temporären Verzicht hingegen werden Leistungselektroniken vorgesehen, die lediglich bedarfsweise zu- oder abgeschaltet werden. Diese Variante bietet sich insbesondere in Verbindung mit der schaltbaren Hartverdrahtung der Teilphasen der elektrischen Maschinen 12 an.

Figur 9 zeigt eine erste Verschaltungsalternativ im Hinblick auf die Regelung der elektrischen Maschinen 12 bzw. der sie ansteuernden Leistungselektroniken 70. Eingangsseitig der Leistungselektroniken 70 ist ein Master-Regler 80 vorgesehen, der über eine nicht näher dargestellte Sensorik Bewegungsparameter der dem erfindungsgemäßen Antrieb folgenden Elemente des Antriebsstrangs rückgekoppelt erhält. Hieraus ermittelt der Master-Regler, zusammen mit einer ihm zugeleiteten Sollvorgabe die Ansteuerungsparameter für sämtlich Leistungselektroniken 70. Er übermittelt diese Steuerparameter teils unmittelbar und teils über ihm nachgeschaltete Slave-Regler 81 an die Leistungselektroniken 70.

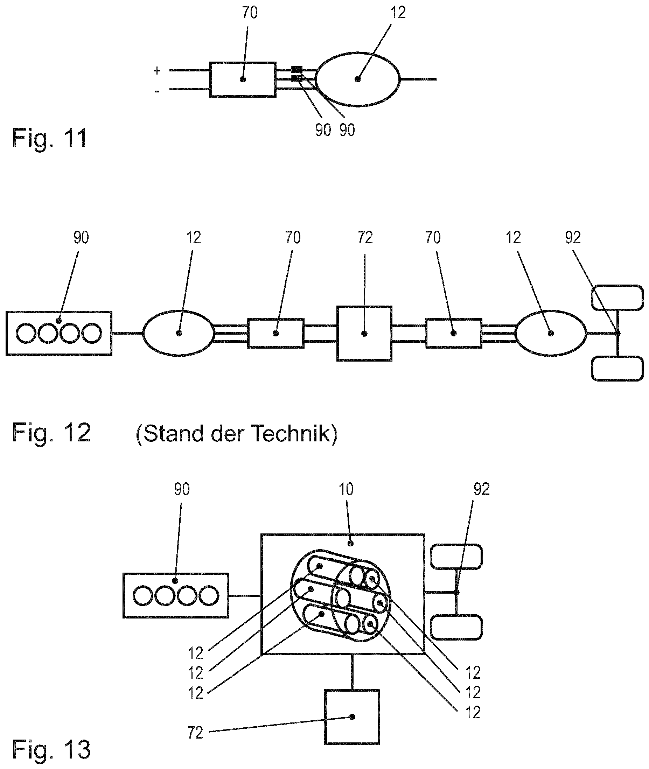

Figur 10 zeigt eine alternative Verschaltung hierzu, bei der alle Leistungselektroniken 70 über gleichberechtigte Regler 82 angesteuert werden. Jeder der Regler 82 erhält Bewegungsparameter von dem erfindungsgemäßen Antrieb nachgeschalteten Komponenten des Antriebsstrangs. Dieser sensorische und schaltungstechnische Mehraufwand ist insbesondere dann lohnend, wenn die ermittelten Bewegungsparameter einzelnen elektrischen Maschinen 12 konkret zugeordnet und an den diesen jeweils zugeordneten Regler 82 rückgekoppelt werden können. Selbstverständlich ist bei dieser Variante auch jeder einzelne Regler 82 mit einer individuellen Sollvorgabe zu versehen. Zur korrekten Regelung elektrischer Maschinen 12 ist typischerweise neben der Erfassung mechanischer Parameter auch die Erfassung elektrischer Parameter, insbesondere des Stroms auf den einzelnen Teilphasen, erforderlich. Hierzu werden die Teilphasen typischerweise mit individuellen Stromsensoren 90 ausgestattet. Durch Nutzung von Synergieeffekten kann, wie in Figur 11 angedeutet, im Rahmen der Erfindung auf einzelne Teilphasen-Stromsensoren 90 verzichtet werden, wenn sich durch Messung korrespondierender Ströme in Teilphasen anderer elektrischer Maschinen 12 die benötigten Informationen durch Auswertung von Redundanzen ermitteln lassen.

Figur 12 zeigt einen typischen Aufbau eines herkömmlichen Antriebsstrangs nach dem Prinzip des seriellen Hybridantriebs. Eine Verbrennungskraftmaschine 90 treibt eine generatorisch betriebene elektrische Maschine 12 an, die über eine Leistungselektronik 70 die erzeugte elektrische Energie in einen elektrischen Speicher 72 einspeist. Dieser widerum versorgt eine weitere Leistungselektronik 70, die eine motorisch betriebene elektrische Maschine 12 steuert. Diese ist ausgangsseitig mit dem Abtrieb 92 des Kraftfahrzeugs verbunden.

Figur 13 hingegen zeigt einen seriellen Hybridantrieb unter Verwendung der vorliegenden Erfindung. Hierbei werden einige der innerhalb der Motoranordnung 10 vorgesehen elektrischen Maschinen 12 generatorisch betrieben und sind mit der Verbrennungskraftmaschine 90 verbunden. Andere elektrische Maschinen 12 hingegen werden motorisch betrieben und sind mit dem Abtrieb 92 verbunden. Die in Figur 13 nicht gesondert dargestellten Leistungselektroniken wechselwirken in oben beschriebener Weise mit dem elektrischen Energiespeicher 72.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der beiliegenden Ansprüche ein breites Spektrum an Variationsmöglichkeiten an die Hand gegeben.

## Patentansprüche

1. Elektrischer Antrieb eines Kraftfahrzeugs, umfassend
- eine Motoranordnung (10) mit einer Mehrzahl elektrischer Maschinen (12), jeweils umfassend einen Stator (14) und einen Rotor (16), die mit parallel ausgerichteten Rotorwellen (18) ringförmig um eine Zentralachse angeordnet sind und einen Motorenring bilden,
- eine Abtriebsanordnung, die wenigstens mit einem Antriebsrad des Kraftfahrzeugs verbindbar ist, und
- eine einerseits mit der Motoranordnung und andererseits mit der Abtriebsanordnung verbundene Übersetzungsstufe (26) mit einer mit der Abtriebsanordnung verbundenen Übersetzungs-Sonne (34) und einer Mehrzahl jeweils mit einer der elektrischen Maschinen (12) verbundener Übersetzungs-Planeten (28), die jeweils auf den Rotorwellen fixiert und ringförmig um die Übersetzungs-Sonne (34) angeordnet sind und drehmomentübertragend an ihr abwälzen,
**dadurch gekennzeichnet,**
**dass** zur Ansteuerung der elektrischen Teilphasen der elektrischen Maschinen (12) eine oder mehrere mit einer oder mehreren elektrischen Spannungsquellen verbundene Leistungselektroniken vorgesehen sind, die jeweils über einen Regler (82), zu welchem Bewegungsparameter der Abtriebsanordnung und/oder der Übersetzungsanordnung rückgekoppelt sind, geregelt sind, wobei der Regler (82) einer ersten Leistungselektronik als Master-Regler (80) und die Regler (82) weiterer Leistungselektroniken als von dem Master-Regler (80) abhängige Slave-Regler (81) oder alle Regler (82) als voneinander unabhängige, gleichartige Partikular-Regler eingerichtet sind.

2. Elektrischer Antrieb eines Kraftfahrzeugs nach Anspruch 1, **dadurch gekennzeichnet,**
**dass** sämtliche elektrische Maschinen (12) jeweils mit einer separaten Leistungselektronik, verbunden sind.

3. Elektrischer Antrieb eines Kraftfahrzeugs nach Anspruch 1, **dadurch gekennzeichnet,**
**dass** zwei oder mehr elektrische Maschinen (12) elektrisch miteinander verschaltet und dadurch mit derselben Leistungselektronik verbunden oder verbindbar sind.

4. Elektrischer Antrieb eines Kraftfahrzeugs nach einem der vorstehenden Ansprüche, **dadurch gekennzeichnet,**
**dass** unterschiedliche Leistungselektroniken an unterschiedliche Spannungsquellen angeschlossen sind.

5. Elektrischer Antrieb eines Kraftfahrzeugs nach einem der vorstehenden Ansprüche, **dadurch gekennzeichnet,**
**dass** Sensoren zur unmittelbaren Erfassung von Werten bestimmter Betriebsparameter bei einigen der elektrischen Maschinen (12) sowie zur Abschätzung nicht unmittelbar erfasster Werte derselben Betriebsparameter bei anderen der elektrischen Maschinen (12) vorgesehen sind.

6. Elektrischer Antrieb eines Kraftfahrzeugs nach einem der vorstehenden Ansprüche, **dadurch gekennzeichnet,**
**dass** die elektrischen Maschinen (12) gruppenweise unterschiedlichen Bautyps sind.

7. Elektrischer Antrieb eines Kraftfahrzeugs nach den Ansprüchen 5 und 6, **dadurch gekennzeichnet,**
**dass** für jede Bautyp-Gruppe der elektrischen Maschinen (12) für einen bestimmten Betriebsparameter nur ein entsprechender Sensor vorgesehen ist.

8. Elektrischer Antrieb eines Kraftfahrzeugs nach einem der vorstehenden Ansprüche, **dadurch gekennzeichnet,**
**dass** die elektrischen Maschinen (12) gruppenweise unterschiedlich angesteuert sind.

9. Elektrischer Antrieb eines Kraftfahrzeugs nach Anspruch 5 und 8, **dadurch gekennzeichnet,**
**dass** für jede Ansteuerungs-Gruppe der elektrischen Maschinen (12) für einen bestimmten Betriebsparameter nur ein entsprechender Sensor vorgesehen ist.

10. Elektrischer Antrieb eines Kraftfahrzeugs nach Anspruch 5, **dadurch gekennzeichnet,**
**dass** Stromsensoren zur unmittelbaren Erfassung einiger angesteuerter Teilphasen sowie zur Abschätzung anderer, nicht unmittelbar erfasster Teilphasen der elektrischen Maschinen (12) vorgesehen sind.

11. Elektrischer Antrieb eines Kraftfahrzeugs nach Anspruch 5, **dadurch gekennzeichnet,**
**dass** Lagesensoren zur unmittelbaren Erfassung von Rotationslagen einiger der elektrischen Maschinen (12) sowie zur Abschätzung nicht unmittelbar erfasster Rotationslagen anderer der elektrischen Maschinen (12) vorgesehen sind.

12. Elektrischer Antrieb eines Kraftfahrzeugs nach Anspruch 5, **dadurch gekennzeichnet,**
**dass** Temperatursensoren zur unmittelbaren Erfassung von Temperaturen einiger der elektrischen Maschinen (12) sowie zur Abschätzung nicht unmittelbar erfasster Temperaturen anderer der elektrischen Maschinen (12) vorgesehen sind.

13. Verfahren zum Betrieb eines elektrischen Antriebs feines Kraftfahrzeugs nach Anspruch 8, **dadurch gekennzeichnet,**
**dass** eine erste Gruppe der elektrischen Maschinen (12) motorisch und eine zweite Gruppe der elektrischen Maschinen (12) generatorisch betrieben wird.

14. Verfahren zum Betrieb eines elektrischen Antriebs eines Kraftfahrzeugs nach Anspruch 8, **dadurch gekennzeichnet,**
**dass** unterschiedliche Gruppen der elektrischen Maschinen (12) mit unterschiedlichem Schlupf ihrer Übersetzungs-Planteten (28) relativ zu der Übersetzungs-Sonne (34) betrieben werden.

15. Verfahren zum Betrieb eines elektrischen Antriebs eines Kraftfahrzeugs nach Anspruch 8, **dadurch gekennzeichnet,**
**dass** unterschiedliche Gruppen der elektrischen Maschinen (12) zeitlich versetzt zueinander zeitweise mit Überlast und zeitweise mit Unterlast betrieben werden.

16. Serieller Hybridantriebsstrang eines Kraftfahrzeugs umfassend eine Verbrennungskraftmaschine, eine Abtriebsanordnung, einen elektrischen Energiespeicher, wenigstens eine mechanisch mit der Verbrennungskraftmaschine und elektrisch mit dem elektrischen Energiespeicher gekoppelte und generatorisch betriebene elektrische Maschine (12) sowie wenigstens eine mechanisch mit der Abtriebsanordnung und elektrisch mit dem elektrischen Energiespeicher gekoppelte und motorisch betriebene elektrische Maschine (12),
**dadurch gekennzeichnet,**
**dass** die elektrischen Maschinen (12) Bestandteile eines elektrischen Antriebs gemäß Anspruch 8 sind, der und nach einem Verfahren gemäß Anspruch 13 betreibbar ist.

## Claims

1. Electric drive of a motor vehicle, comprising
- a motor assembly (10) with a plurality of electric machines (12), each comprising a stator (14) and a rotor (16), which are arranged in a ring around a central axis with rotor shafts (18) oriented in parallel and form a motor ring,
- an output assembly which can be connected at least to a driving wheel of the motor vehicle, and
- a transmission stage (26), which is connected on one side to the engine assembly and on the other side to the output assembly and which has a transmission sun (34) connected to the output assembly and a plurality of transmission planets (28), which are each connected to one of the electric machines (12) and which are each fixed on the rotor shafts and are arranged in a ring around the transmission sun (34) and roll over the transmission sun in a torque-transmitting manner,
**characterized in that**
one or more power electronics units connected to one or more electric voltage sources are provided in order to control the electrical sub-phases of the electric machines (12), which power electronics units are in each case regulated via a regulator (82), to which movement parameters of the output assembly and/or of the transmission assembly are fed back, wherein the regulator (82) of a first power electronics unit is configured as a master regulator (80) and the regulators (82) of further power electronics units are configured as slave regulators (81) dependent on the master regulator (80), or all regulators (82) are configured as identical individual regulators independent of one another.

2. Electric drive of a motor vehicle according to Claim 1,
**characterized in that**
all electric machines (12) are connected to a separate power electronics unit.

3. Electric drive of a motor vehicle according to Claim 1,
**characterized in that**
two or more electric machines (12) are electrically connected to one another and are thus connected or connectable to the same power electronics unit.

4. Electric drive of a motor vehicle according to any one of the preceding claims,
**characterized in that**
different power electronics units are connected to different voltage sources.

5. Electric drive of a motor vehicle according to any one of the preceding claims,
**characterized in that**
sensors for the direct detection of values of certain operating parameters are provided in some of the electric machines (12) and sensors for estimating values, not directly detected, of the same operating parameters are provided in other electric machines (12) .

6. Electric drive of a motor vehicle according to any one of the preceding claims,
**characterized in that**
the electric machines (12) are grouped according to different designs.

7. Electric drive of a motor vehicle according to either one of Claims 5 and 6,
**characterized in that**
only one corresponding sensor is provided for each design group of the electric machines (12) for a certain operating parameter.

8. Electric drive of a motor vehicle according to any one of the preceding claims,
**characterized in that**
the electric machines (12) are controlled differently in groups.

9. Electric drive of a motor vehicle according to Claims 5 and 8,
**characterized in that**
just one corresponding sensor is provided for each control group of the electric machines (12) for a certain operating parameter.

10. Electric drive of a motor vehicle according to Claim 5,
**characterized in that**
current sensors for the direct detection of some controlled sub-phases and for the estimation of other sub-phases, not directly detected, of the electric machines (12) are provided.

11. Electric drive of a motor vehicle according to Claim 5,
**characterized in that**
position sensors for the direct detection of rotational positions of some of the electric machines (12) and for the estimation of rotational positions, not directly detected, of other electric machines (12) are provided.

12. Electric drive of a motor vehicle according to Claim 5,
**characterized in that**
temperature sensors for the direct detection of temperatures of some of the electric machines (12) and the estimation of temperatures, not directly detected, of other electric machines (12) are provided.

13. Method for operating an electric drive of a motor vehicle according to Claim 8,
**characterized in that**
a first group of the electric machines (12) is operated as a motor and a second group of the electric machines (12) is operated as a generator.

14. Method for operating an electric drive of a motor vehicle according to Claim 8,
**characterized in that**
different groups of the electric machines (12) are operated with different slip of their transmission planets (28) relative to the transmission sun (34).

15. Method for operating an electric drive of a motor vehicle according to Claim 8,
**characterized in that**
different groups of the electric machines (12) are operated temporarily with overload and temporarily with underload at different times.

16. Serial hybrid drive train of a motor vehicle, comprising an internal combustion engine, an output assembly, an electrical energy store, at least one electric machine (12) coupled mechanically to the internal combustion engine and electrically to the electrical energy store and operated as a generator, and also at least one electric machine (12) coupled mechanically to the output assembly and electrically to the electrical energy store and operated as a motor,
**characterized in that**
the electric machines (12) are parts of an electric drive according to Claim 8, which can be operated in accordance with a method according to Claim 13.

## Revendications

1. Entraînement électrique d'un véhicule automobile, comprenant
- un ensemble moteur (10) comportant une pluralité de machines électriques (12) comprenant chacune un stator (14) et un rotor (16) qui sont disposés annulairement autour d'un axe central avec des arbres de rotor (18) orientés parallèlement et qui forment un anneau moteur,
- un ensemble de sortie pouvant être relié au moins à une roue d'entraînement du véhicule automobile, et
- un étage de transmission (26) associé d'une part à l'ensemble moteur et d'autre part à l'ensemble de sortie et comprenant une roue solaire de transmission (34) relié à l'ensemble de sortie (34) et une pluralité de roues planétaires de transmission (28) reliées chacune à l'une des machines électriques (12), fixées chacune à un arbre de rotor, disposées annulairement autour de la roue solaire de transmission (34) et roulant de manière à lui transmettre un couple, **caractérisé en ce que**
au moins une électronique de puissance, reliée à au moins une source de tension électrique, est prévue pour commander les phases partielles électriques des machines électriques (12), l'au moins une électronique de puissance étant régulée par un régulateur (82) auquel des paramètres de mouvement de l'ensemble de sortie et/ou de l'ensemble de transmission sont injectés par rétroaction, le régulateur (82) d'une première électronique de puissance étant conçu comme un régulateur maître (80) et les régulateurs (82) d'autres électroniques de puissance étant conçus comme des régulateurs esclaves (81) dépendant du régulateur maître (80) ou tous les régulateurs (82) étant conçus comme des régulateurs particuliers de même type indépendants les uns des autres.

2. Entraînement électrique d'un véhicule automobile selon la revendication 1,
**caractérisé en ce que**
toutes les machines électriques (12) sont reliées à une électronique de puissance séparée.

3. Entraînement électrique d'un véhicule automobile selon la revendication 1,
**caractérisé en ce que**
au moins deux machines électriques (12) sont reliées électriquement entre elles et par conséquent sont reliées ou peuvent être reliées à la même électronique de puissance.

4. Entraînement électrique d'un véhicule automobile selon l'une des revendications précédentes,
**caractérisé en ce que**
différentes électroniques de puissance sont reliées à différentes sources de tension.

5. Entraînement électrique d'un véhicule automobile selon l'une des revendications précédentes,
**caractérisé en ce que**
des capteurs sont prévus pour détecter directement des valeurs de paramètres de fonctionnement déterminés dans certaines des machines électriques (12), ainsi que pour évaluer des valeurs non détectées directement des mêmes paramètres de fonctionnement dans d'autres machines électriques (12).

6. Entraînement électrique d'un véhicule automobile selon l'une des revendications précédentes,
**caractérisé en ce que**
les machines électriques (12) appartiennent par groupes à différents types de construction.

7. Entraînement électrique d'un véhicule automobile selon les revendications 5 et 6,
**caractérisé en ce que**
un seul capteur correspondant est prévu pour chaque groupe de type de construction des machines électriques (12) pour un paramètre de fonctionnement déterminé.

8. Entraînement électrique d'un véhicule automobile selon l'une des revendications précédentes,
**caractérisé en ce que**
les machines électriques (12) sont commandées différemment par groupes.

9. Entraînement électrique d'un véhicule automobile selon les revendications 5 et 8,
**caractérisé en ce que**
un seul capteur correspondant est prévu pour chaque groupe de commande des machines électriques (12) pour un paramètre de fonctionnement déterminé.

10. Entraînement électrique d'un véhicule automobile selon la revendication 5,
**caractérisé en ce que**
des capteurs de courant sont prévus pour détecter directement certaines phases partielles commandées ainsi que pour évaluer d'autres phases partielles non détectées directement des machines électriques (12).

11. Entraînement électrique d'un véhicule automobile selon a revendication 5,
**caractérisé en ce que**
des capteurs de position sont prévus pour détecter directement des positions en rotation de certaines des machines électriques (12) et pour évaluer des positions en rotation non détectées directement d'autres machines électriques (12).

12. Entraînement électrique d'un véhicule automobile selon la revendication 5,
**caractérisé en ce que**
des capteurs de température sont prévus pour détecter directement des températures de certaines des machines électriques (12) et pour évaluer des températures non détectées directement des autres des machines électriques (12).

13. Procédé de fonctionnement d'un entraînement électrique d'un véhicule automobile selon la revendication 8,
**caractérisé en ce que**
un premier groupe de machines électriques (12) fonctionne en moteur et un deuxième groupe de machines électriques (12) fonctionne en générateur.

14. Procédé de fonctionnement de l'entraînement électrique d'un véhicule automobile selon la revendication 8,
**caractérisé en ce que**
différents groupes de machines électriques (12) fonctionnent avec un glissement différent de leurs roues planétaires de transmission (28) par rapport à la roue de transmission solaire (34).

15. Procédé de fonctionnement d'un entraînement électrique d'un véhicule automobile selon la revendication 8,
**caractérisé en ce que**
différents groupes de machines électriques (12) fonctionnent en décalage temporel entre eux temporairement avec surcharge et temporairement avec sous-charge.

16. Groupe motopropulseur hybride série d'un véhicule automobile, comprenant un moteur à combustion interne, un ensemble de sortie, un accumulateur d'énergie électrique, au moins une machine électrique fonctionnant en générateur, qui est accouplée mécaniquement au moteur à combustion interne et couplée électriquement à l'accumulateur d'énergie, et au moins une machine électrique (12) fonctionnant en moteur qui est accouplée mécaniquement à l'ensemble de sortie et couplée électriquement à l'accumulateur d'énergie électrique,
**caractérisée en ce que**
les machines électriques (12) sont des composants d'un entraînement électrique selon la revendication 8 qui peut fonctionner selon un procédé de la revendication 13.
